# EUROPÄISCHE PATENTSCHRIFT

(11) **EP 1 420 671 B1**
(45) Veröffentlichungstag und Bekanntmachung des Hinweises auf die Patenterteilung: **22.12.2004**
(21) Anmeldenummer: 02764800.5
(22) Anmeldetag: 27.07.2002
(51) Int. Cl.: A47G 7/04, A01G 9/02

(54) **BLUMENTOPF**
FLOWER POT
POT DE FLEURS

(30) Priorität: 30.08.2001 DE 20114322 U
(43) Veröffentlichungstag der Anmeldung: 26.05.2004
(73) Patentinhaber: Pöppelmann Holding GmbH & Co. KG., 49393 Lohne (DE)
(72) Erfinder: LÜKEN, Reinhard, 49696 Dwergte (DE); SIEVERDING, Alfons, 49393 Lohne-Brockdorf (DE)
(74) Vertreter: Bünemann, Egon
(86) Internationale Anmeldenummer: PCT/EP2002/008406
(87) Internationale Veröffentlichungsnummer: WO 2003/020086

(56) Entgegenhaltungen:
- EP-A- 0 047 025
- EP-A- 1 092 343
- FR-A- 2 781 201
- NL-C- 1 002 746
- US-A- 4 138 803
- PATENT ABSTRACTS OF JAPAN vol. 2000, no. 14, 5. März 2001 (2001-03-05) -& JP 2000 316387 A (TOKAI KASEI:KK), 21. November 2000 (2000-11-21)

## Beschreibung

Die Erfindung betrifft einen Blumentopf aus tiefgezogenem Kunststoff nach dem Oberbegriff des Anspruchs 1 für eine Blumenampel mit einem beispielsweise aus der NL-C-1002746 bekannten Hänger.

Blumentöpfe aus Kunststoff sind weit verbreitet, wobei spritzgegossene Kunststofftöpfe einen relativ hohen Freiheitsgrad für die Gestaltung des Topfes bieten und die Einfügung von Stegen, Versteifungsrippen, Wandverzweigungen und dgl. ermöglichen. Die gestalterische Freiheit wird hauptsächlich durch das Erfordernis der Entformbarkeit an Topf und Spritzgußform und durch Mindestwandstärken für die Fließwege beim Spritzen eingeschränkt. Wenn nämlich von einem bodenseitigen Anspritzpunkt aus Spritzgußmaterial über dünnwandige Bereiche bis zum Topfrand gespritzt werden muß, droht im Wandungsbereich ein "Einfrieren" in Form von Materialverfestigung.

Alternativ kommen Blumentöpfe und sonstige Pflanztöpfe aus Kunststoff in tiefgezogener Form auf, nachdem es gelungen ist, die Wandstärkenverteilung eines solchen Produktes zu beherrschen und dabei insbesondere auch im Bereich der konischen Topfwand Wandstärken vorzugeben, die im Spritzgußverfahren Probleme bereiten. Von Interesse ist auch, daß der tiefgezogene Topf am oberen Rand, der normalerweise flanschartig mit einen nach unten rückgebogenen Kragen ausgebildet ist, seine größte Wandstärke behält. Dort ist auch eine entsprechende Steifigkeit gefragt. Dieser Rand entsteht durch eine ringförmige Einspannung einer tiefzuziehenden Kunststofffolie, die im Innenbereich durch ein Formwerkzeug und durch Anwendung von inneren Überdruck bzw. äußerem Vakuum innen an einer Hohlform angelegt werden.

Die ringförmige Einspannung bedingt allerdings eine durchlaufende Randkontur ohne Unterbrechungen oder Versprünge. Diese Randkontur ist unvorteilhaft bei Blumentöpfen, die für Blumenampeln o. dgl. hängende Verwendung vorgesehen sind und bei denen ein Hänger mit mehreren, vorzugsweise drei Strängen über Hakenklammern am Topfrand festgeklipst wird. Die Hakenklammem erhalten dabei keine vorgegebene unverrückbare Position. Vielmehr können diese längs des Randes wandern und sich insgesamt auf eine Seite des Topfrandes verschieben und eine Kipplage hervorrufen. Bei spritzgegossenen Blumentöpfen ergibt sich eine Lagefixierung leicht durch Zwischenstege oder Rippen unter dem Rand, die teilweise ohnehin vorgesehen werden, oder Ausformungen und besondere Konturierungen des Randes selbst, was bei tiefgezogenen Produkten zu nicht oder schwer realisierbar sein würde.

Aufgabe der Erfindung ist es, einen im Tiefziehverfahren hergestellten Blumentopf so zu gestalten, daß er trotz der besonderen verfahrenstechnischen vorgegebenen Gestaltungsbedingungen eine Fixierung des Sitzes der Hakenklammem ermöglicht, eine gute Überleitung von Hängelasten zwischen Topf- und Hakenklammer schafft und ein ansprechende und gut handhabbare Form bietet.

Gemäß der Erfindung wird die Aufgabe bei einem Blumentopf nach dem Oberbegriff des Anspruchs 1 mit den kennzeichnenden Merkmalen des Anspruchs 1 gelöst.

Es hat sich gezeigt, daß auch das Tiefziehverfahren eine Ausgestaltung des kritischen Topfrandes zuläßt, wenn man etwa Verschmälerungen vorsieht und diese innenseitig zur Wand des Topfes hin einarbeitet. Es versteht sich, daß eine solche Veränderung sowohl das Arbeitsverfahren beim Tiefziehen wie auch die Hohlform für das Tiefziehen wie auch die Gestaltung des Topfes weitergehend beeinflußt. Die Verschmälerungen im Verlauf des Randes schaffen grundsätzlich einen vorgegebenen Sitz für die Klammern, der von diesen nur durch Aufweitung und damit nur nach Überwindung eines elastischen Widerstandes verlassen werden kann. Die Verschmälerungen vermeiden auch große Aufweitungen und Hebelverhältnisse an den Klammern und damit entsprechende mechanische Belastungen. Darüber hinaus können die Verschmälerungen so gestaltet werden, daß sie nicht etwa mit fließenden Übergangsbereichen, sondern abrupt und winklig in die breiteren Randbereiche übergehen, so daß an den Übergängen auch Anschlagfunktionen für die Hakenklammern vorliegen.

Vorzugsweise werden die Verschmälerungen des Randes mit einer stufenförmigen Ausbildung des Übergangsbereichs zwischen Topfrand und Topfwand verbunden, so daß sich auch in diesem Bereich die Wandung vom Rand in die Topfwand hinein fortsetzt und durch die besondere räumliche Gestaltung eine Aussteifung entsteht, die für den Kraftfluß zum Sitz der Hakenklammem hin durchaus vorteilhaft ist.

Die Höhe der Stufen wird zweckmäßig so ausgelegt, daß die bei den Hängem verwandten Klammem kein wesentliches Bewegungsspiel erhalten. Auch beim Hochstoßen oder Hochdrücken der Töpfe erfahren die Hakenklammern somit keine kritische, evtl. den Halt mit dem Topf gefährdende Bewegung oder Aufspreizung, vielmehr bildet die Stufe einen Stufenboden, der die Hakenklammem in vertikaler Richtung in der Position hält.

Zweckmäßig wird die Stufenform auch in der Breite jedenfalls in Bezug auf die breitest vorgesehenen Hakenklammem knapp dimensioniert, so daß diese sich in die Stufenform mit geringem Spiel einpassen und auch unter Stoß- oder Druckbelastungen nicht zum Verkanten und Aushaken neigen.

Ein Ausführungsbeispiel der Erfindung ist in der Zeichnung dargestellt und wird nachfolgend näher beschrieben. In der Zeichnung zeigen:

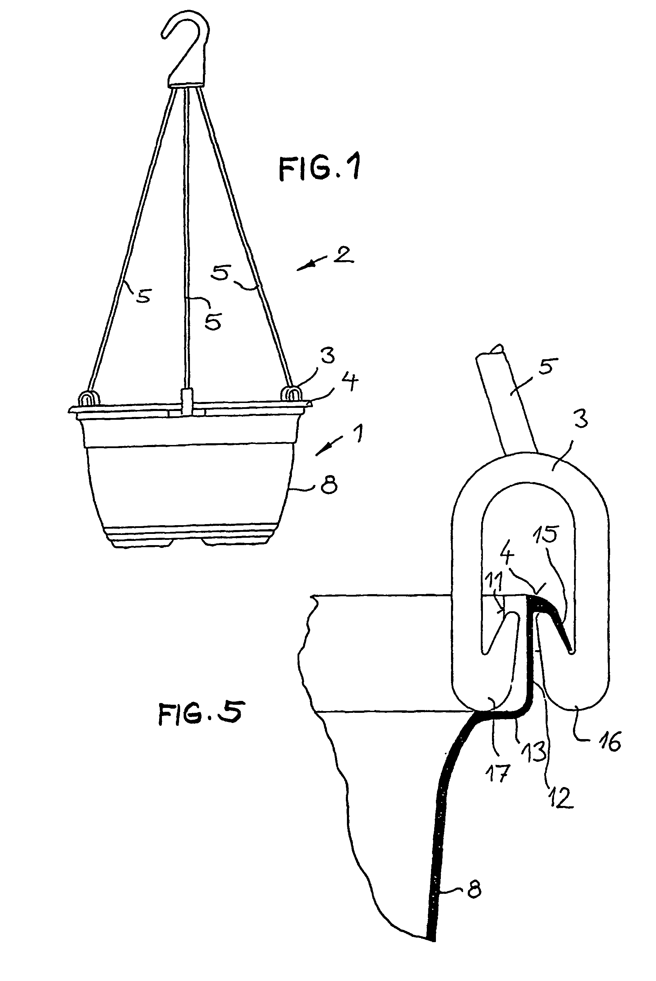

- Fig. 1: Seitenansicht einer Blumenampel aus einem Blumentopf als Tiefziehteil und einem Hänger,
- Fig. 2: Ansicht des Blumentopfs nach Fig. 1 schräg von oben,
- Fig. 3: Ansicht gemäß Fig. 2 mit darüber schwebend dargestellten Hakenklammem eines Hängers,

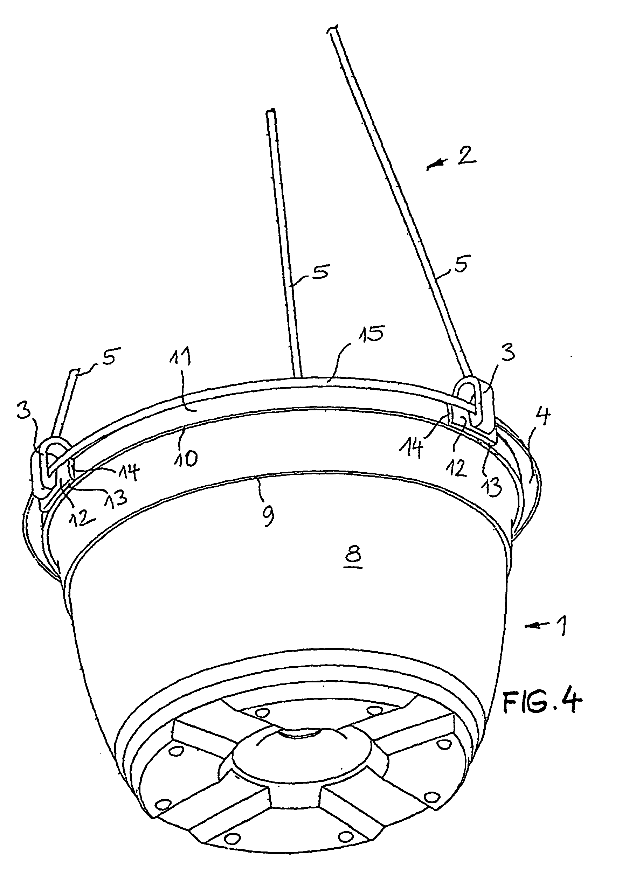

- Fig. 4: Ansicht des Blumentopfs schräg von unten mit befestigten Hakenklammem und
- Fig. 5: vergrößerte Schnittansicht durch den Rand des Blumentopfs am Sitz einer Hakenklammer.

Ein Blumentopf 1 gemäß der Erfindung ist als Tiefziehteil ausgebildet und mit einem Hänger 2 als Spritzgußteil verbunden. Beide sind aus Kunststoff hergestellt. Der Hänger 2 ist dabei mit Hakenklammern 3 versehen, die mit einem oberen Topfrand 4 des Topfes 1 rastend zu verbinden sind. Der Hänger 2 weist überdies drei Stränge 5 auf, die zu einem oberseitigen Haken 6 zusammenlaufen, an dem Topf 1 und Hänger 2 als Blumenampel aufzuhängen sind.

Der Hänger 2 in seiner spritzgegossenen Form ist lediglich ein bekanntes Beispiel einer in der Praxis in Detailvarianten zu findenden Ausführungsform. Die für die Verbindung mit dem Topf 1 maßgeblichen Hakenklammem 3 sind im vorliegenden Fall spiegelsymmetrisch ausgebildet, so daß dieser mit zwei Haken auch um 180° verdreht angeordnet werden kann, was die Handhabung vereinfacht. Es versteht sich, daß die jeweilige Hakenklammer aber auch in der Weise ausgebildet sein kann, daß einem Hakenteil ein hakenloses Gegenstück gegenüberliegt.

Die Gestaltung des Topfes 1 wird stark von der Formgebung durch Tiefziehen bestimmt. Beim Tiefziehen verbieten sich komplexe Formgebungen wie Rippen, Wandverzweigungen und dgl. Es sind aber auch dann, wenn man die Form als eine durchlaufende geschlossene Wandung vorgibt, Zusammenhänge zwischen der Formgebung etwa bei Aus- oder Einbeulungen und Wandstärke zu beachten. Ein gewisser Einfluß auf die Wandstärkenverteilung ist zwar durch schrittweises Vorgehen und besondere Ausformwerkzeuge vor einer Entverformung durch Vakuum von außen und/oder Überdruck von innen zu erhalten. Die Zusammenhänge sind aber in jedem Fall als komplex zu betrachten.

Eine weitere Beschränkung der Formgebung entsteht dadurch, daß das Produkt aus einem Flachmaterial geformt wird, das regelmäßig bei der Formgebung an einem Rand festzulegen ist. Dieser Rand bildet hier den Topfrand 4, der dabei vom Tiefziehen besonders wenig beeinflußt und deshalb - durchaus vorteilhaft - besonders steif ausgebildet ist. Es wäre jedoch zumindest schwierig, den Topfrand mit Unterbrechungen oder Versprüngen zu versehen.

Ein tiefgezogener Topf der dargestellten Art, aus einem flachen Kunststoff-Halbzeug von 1 bis 1,8 mm, hier 1,45 mm Dicke geformt, erhält durch das Tiefziehen eine Wandstärkenverteilung zwischen 0,8 mm am Topfrand 4 Ober etwa 0,5 mm am Boden bis zu weniger als 0,3 mm in der Wand 8.

Ein fertigungsgerecht als Streifen oder Profil durchlaufender Topfrand könnte allerdings keinen definierten Sitz und keine Fixierung der Hakenklammern 3 in Umfangsrichtung erzielen. Dies gilt sowohl bei einem runden Topf der dargestellten Art gegenüber drei Hakenklammem wie auch etwa bei einem Viereck- oder Sechseck-Topf. Die Hakenklammem könnten leicht längs des Randes wandern oder verrutschen und den Topf beim Hängen in eine Schieflage bringen.

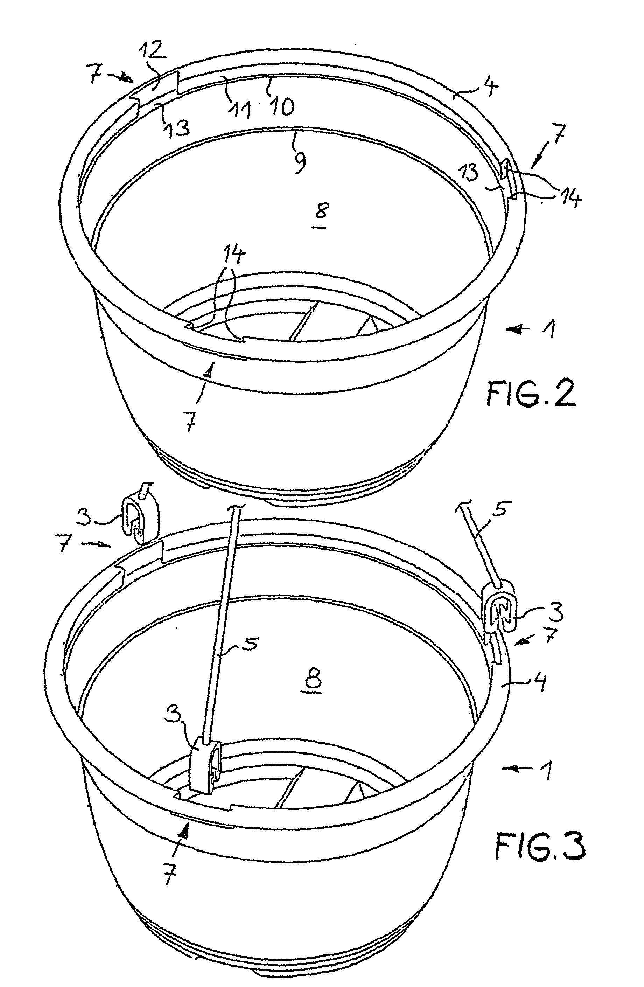

Fig. 2 zeigt nun eine Gestaltung des Topfrandes 4 mit drei symmetrisch verteilten Verschmälerungen 7, die sich als Sitz für die Hakenklammern eignen.

Diese Verschmälerungen des Topfrandes 4 sind als Teil der insgesamt schalenartigen Gestaltung des Tiefziehteils ausgebildet, indem dort über einen kurzen Abschnitt ein Bereich einer benachbarten Wand 8, die im wesentlichen und mit Ausnahme schmaler Versteifungssimse 9,10 senkrecht verläuft.

Im vorliegenden Fall wird also ein zwischen dem obersten Sims 10 und dem Topfrand 4 verlaufender Ringstreifen 11 der Wand 8 zu einem etwa senkrecht verlaufenden Abschnitt 12 nach außen verlagert, wobei der Sims 10 eine Simsverbreiterung 13 erhält. In Umfangsrichtung wird die schalenartig geschlossene Form des Tiefziehteils durch Stirnwände 14 ergänzt, die den Sitz näherungsweise rechtwinklig abschließen, im vorliegenden Fall sogar über 90° hinausgeformt sind und spitzwinklige Anschlüsse bilden.

Eine solche Ausformung des Topfes läßt sich auch bei einem Tiefziehteil realisieren, da jedenfalls im äußeren Bereichs des Topfrands 4 ein geschlossener Randstreifen verbleibt, an dem der zunächst flache Formling auch beim Tiefziehen festen Halt findet. Auch die Schalenform des Tiefziehteils bleibt erhalten, ohne daß hier systemwidrige Verzweigungen oder Verformungen entgegen der Hauptformrichtung nach unten und außen benötigt würden.

Die Verschmälerungen 7 sind durchaus vorteilhaft für den Sitz der Hakenklammern, die beim Aufstecken entsprechend wenig aufgespreizt werden müssen und die in der Gebrauchsstellung den Topfrand dicht an einer senkrechten Wand, nämlich dem Wandteil 12 untergreifen, was der Überleitung der Hängekräfte dient. Es versteht sich, daß die Verschmälerungen auch das Einrasten von Hand erleichtern.

Die wichtigste Funktion der Verschmälerungen und insbesondere auch der Stirnseiten 14 an diesen ist jedoch in der Festlegung der Hakenklammem in Umfangsrichtung zu sehen. Bei zumindest näherungsweise rechtwinkliger Ausformung der Stimwände, erst recht natürlich bei einer bis zu spitzen Winkeln gehenden Ausformung der dargestellten Art, läßt sich eine Sicherheit gegen unbeabsichtigtes Auswandern der Hakenklammem 3 in Umfangsrichtung annehmen. Auch bei einer "weicheren" Ausformung der Verschmälerungen mit schrägen Übergängen wäre zwar im Normalfall ein Verbleiben der Hakenklammem an ihrem vorgegebenen Sitz anzunehmen, ohne daß dabei ein Verrutschen auf etwa versehentlichen Druck oder Stoß ausgeschlossen werden könnte.

Wie die vergrößerte Schnittdarstellung gemäß Fig. 5 zeigt, untergreift die Hakenklammer 3 den verschmälerten Rand 4 dicht an dem Wandbereich 12, der sich stufenförmig in die Verbreiterung 13 des Simses 10 und dann weiterhin in die übrige Wand 8 fortsetzt.

Der Rand 4 ist noch mit einem Kragen 15, als umlaufender Fortsatz des Randes 4 ausgeformt, umgeben. Der tragende Haken 16 des Hakenteils 3 umgreift auch diesen Kragen 15 mit einem entsprechend lang ausgebildeten Endbereich und einem entsprechend tief ausgebildeten Innenbereich, so daß der Haken 16 hauptsächlich tragend unter dem Rand 4 anliegt.

Bei der symmetrischen Ausbildung der Hakenklammer 3 liegt dem Haken 16 ein zweiter Haken 17 spiegelbildlich gegenüber. Dieser stützt sich im eingerasteten Zustand der Hakenklammer 3 auf der Verbreiterung 13 ab und legt damit die Hakenklammer 3 in der eingerasteten Stellung in vertikaler Richtung fest. . Damit wird verhindert, daß ein Stoß unter den Topf oder ein Druck von oben auf den Hänger 2 oder eine einzelne Hakenklammer 3 dazu führt, daß sich die Hakenklammer aufspreizt und dann in Umfangsrichtung verschiebt oder gar durch Überspreizen beschädigt wird. Die Verbindung zwischen Topf 1 und Hänger 2 ist damit zumindest spielarm, wenn nicht sogar spielfrei gestaltet, was die Handhabung erleichtert und die Festigkeit der Blumenampel insgesamt verbessert.

Es versteht sich, daß in einer asymmetrischen Ausführungsform der Hakenklammer 3 an die Stelle des Hakens 17 ein Gegenstück zum Haken 16 vorgesehen werden könnte, das bei geringem Abstand zum Abschnitt 12 nach unten verliefe aber zweckmäßig gleichfalls eine Abstützung auf der Verbreiterung 13 herstellt.

Insbesondere aus der Fig. 5 wird auch der Einrastvorgang deutlich, bei dem sich die Hakenklammer 3 aufbiegt, durchaus aber auch der Kragen 15 und der benachbarte Bereich des Topfes nachgeben kann. Die Hakenklammer 3 wird dann so weit nach unten gedrückt, daß der Haken 16 über den Kragen 15 hinaus gelangt, wobei der Haken 17 auf die Wand 8 unterhalb der Verbreiterung 13 drückt. Bei einer Rückwärtsbewegung gelangt der Haken 16 zur Anlage unter den Rand 4, wobei der Haken 17 in seine Ausgangslage gegenüber dem Haken 16 zurückfedern kann und dabei über der Verbreiterung 13 liegt.

Die beiderseitigen Stirnwände 14 einer Verschmälerung 7 benötigen einen Abstand, der den in Betracht kommenden Hakenklammem Platz gibt. Im vorliegenden Fall sind die Hakenklammem relativ schmal ausgebildet und haben in Umfangsrichtung erhebliches Bewegungsspiel. Es versteht sich, daß eine Festlegung der Breite der Hakenklammem vorteilhaft sein kann, um mit einer in Umfangsrichtung eng angepaßten Verschmälerung ein begrenztes Spiel zu erreichen, das dann auch Schwenk- und Kippbewegungen der Hakenklammem an deren Sitz unterbindet.

## Patentansprüche

1. Blumentopf (1) aus tiefgezogenem Kunststoff für eine Blumenampel, bei der ein Hänger (2) mehrere Stränge (5) aufweist, die über Hakenklammern (3) mit dem außenseitig mit einer durchlaufenden Kontur versehenen Topfrand (4) verbunden sind, **dadurch gekennzeichnet, daß** der Topfrand (4) innenseitig zu einer sich nach unten anschließenden Wand (8) Verschmälerungen (7) aufweist, die jeweils einen Sitz für die Hakenklammern (3) bilden.

2. Blumentopf (1) nach Anspruch 1, **dadurch gekennzeichnet, daß** für den Sitz (7) der Hakenklammem (3) jeweils eine Zwischenstufe zwischen dem Topfrand (4) und der Wand (8) ausgebildet ist.

3. Blumentopf (1) nach Anspruch 2, **dadurch gekennzeichnet, daß** die Zwischenstufe (7) beidseitig durch zumindest näherungsweise rechtwinklig abschließende Stirnwände (14) begrenzt ist.

4. Blumentopf (1) nach Anspruch 2 oder 3, **dadurch gekennzeichnet, daß** die Zwi-schenstufe (7) eine den Sitz der Hakenklammer (3) in einer Einraststellung festlegende Höhe aufweisen.

5. Blumentopf (1) nach einem der Ansprüche 1 bis 4, **dadurch gekennzeichnet, daß** die Verschmälerungen (7) in Umfangsrichtung knapp auf die breiteste vorgesehene Hakenklammer (3) dimensioniert sind.

6. Blumentopf (1) nach einem der Ansprüche 1 bis 5, **dadurch gekennzeichnet, daß** die Verschmälerungen (7) einen Sitz für die Hakenklammern (3) bilden, bei dem diese den Topfrand (4) dicht an einem benachbarten, innenseitig nach unten verlaufenden Wandteil (12) untergreifen.

7. Blumentopf (1) nach einem der Ansprüche 1 bis 6, **dadurch gekennzeichnet, daß** der Topfrand (4) umfangsseitig zumindest im Bereich der Verschmälerungen in einen nach unten gerichteten Kragen (15) übergeht, der in einen Innenbereich der jeweiligen Hakenklammer (3) hineinragt.

8. Blumentopf (1) nach Anspruch 7, **dadurch gekennzeichnet, daß** der Kragen (15) den Topfrand (4) insgesamt umschließt und die durchlaufende Umfangs-Kontur des Topfrands (4) bildet.

9. Blumentopf (1) nach einem der Ansprüche 1 bis 8, **dadurch gekennzeichnet, daß** er aus einem flachen Ausgangsmaterial mit einer Dicke zwischen 1 mm und 1,8 mm gezogen ist und bereichsweise eine Wandstärke von weniger als 0,3 mm aufweist.

## Claims

1. A flowerpot (1) made from deep-drawn plastic for a hanging flowerpot, wherein a suspender (2) has several cords (5) which are connected via hook brackets (3) to the pot edge (4) provided on the outside with a continuous contour, **characterised in that** the pot edge (4) has narrowed portions (7) on the inside towards a wall (8) following on downwards, which narrowed portions each form a seat for the hook brackets (3).

2. The flowerpot (1) according to claim 1, **characterised in that** an intermediate stage between the pot edge (4) and the wall (8) is formed in each case for the seat (7) of the hook brackets (3).

3. The flowerpot (1) according to claim 2, **characterised in that** the intermediate stage (7) is bounded on both sides by end walls (14) following on at least approximately at right angles.

4. The flowerpot (1) according to claim 2 or 3, **characterised in that** the intermediate stage (7) has a height fixing the seat of the hook brackets (3) in a snap-in position.

5. The flowerpot (1) according to any one of claims 1 to 4, **characterised in that** the narrowed portions (7) are dimensioned in the peripheral direction just large enough for the widest provided hook bracket (3).

6. The flowerpot (1) according to any one of claims 1 to 5, **characterised in that** the narrowed portions (7) form a seat for the hook brackets (3), whereby the latter engage the pot edge (4) from beneath dose to a neighbouring wall part (12) running downwards on the inside.

7. The flowerpot (1) according to any one of claims 1 to 6, **characterised in that** the pot edge (4) transforms into a downwardly directed collar (15) on the periphery at least in the area of the narrowed portions, said collar projecting into an interior region of the respective hook bracket (3).

8. The flowerpot (1) according to claim 7, **characterised in that** the collar (15) completely surrounds the pot edge (4) and forms the continuous peripheral contour of the pot edge (4).

9. The flowerpot (1) according to any one of claims 1 to 8, **characterised in that** it is drawn from a flat initial material with a thickness between 1 mm and 1.8 mm and has in sections a wall thickness of less than 0.3 mm.

## Revendications

1. Pot de fleurs (1) en matière plastique emboutie pour un ensemble suspendu, avec une tige de suspension (2) présentant plusieurs brins (5) reliés par des crochets (3) au rebord de pot (4) présentant un contour extérieur continu,
**caractérisé en ce que**
le rebord de pot (4) présente à l'intérieur des rétrécissements (7) par rapport à une paroi (8) s'étendant vers le bas, qui forment chacun un siège pour les crochets (3).

2. Pot de fleurs (1) selon la revendication 1,
**caractérisé en ce que**
pour le siège (7) des crochets (3) respectivement un palier intermédiaire est formé entre le rebord de pot (4) et la paroi (8).

3. Pot de fleurs (1) selon la revendication 2.
**caractérisé en ce que**
le palier intermédiaire (7) est délimité des deux côtés par des parois frontales (14) se terminant du moins approximativement à l'angle droit.

4. Pot de fleurs (1) selon la revendication 2 ou 3,
**caractérisé en ce que**
le palier intermédiaire (7) présente une hauteur définissant le siège du crochet (3) dans une position accrochée.

5. Pot de fleurs (1) selon l'une quelconque des revendications 1 à 4,
**caractérisé en ce que**
les rétrécissements (7) sont dimensionnés, dans le sens circonférentiel, pour s'ajuster sur le crochet (3) le plus large.

6. Pot de fleurs (1) selon l'une quelconque des revendications 1 à 5,
**caractérisé en ce que**
les rétrécissements (7) forment un siège pour les crochets (3) au niveau duquel ceux-ci s'accrochent sous le rebord de pot (4) à proximité d'une partie de paroi (12) s'étendant à l'intérieur vers le bas.

7. Pot de fleurs (1) selon l'une quelconque des revendications 1 à 6,
**caractérisé en ce que**
le rebord de pot (4), du côté circonférentiel, se prolonge du moins dans la zone des rétrécissements par un collet (15) orienté vers le bas qui saille dans une zone intérieure du crochet (3) respectif.

8. Pot de fleurs (1) selon la revendication 7,
**caractérisé en ce que**
le collet ( 15) entoure entièrement le rebord de pot (4) et forme le contour circonférentiel continu du rebord de pot (4).

9. Pot de fleurs (1) selon l'une quelconque des revendications 1 à 8,
**caractérisé en ce qu'**
il est embouti à partir d'un produit de départ d'une épaisseur comprise entre 1 mm et 1,8 mm et présente par zones une épaisseur de paroi inférieure à 0,3 mm.
